# EUROPÄISCHE PATENTANMELDUNG

(11) **EP 4 759 613 A1**
(43) Veröffentlichungstag der Anmeldung: **17.06.2026**
(21) Anmeldenummer: 25216300.1
(22) Anmeldetag: 17.11.2025
(51) Int. Cl.: B60L 3/12, B60L 53/18, B60L 53/31, B60L 53/60, B60L 3/00

(54) **LADEEINRICHTUNG FÜR ELEKTROFAHRZEUGE UND EIN VERFAHREN ZUM BETREIBEN EINER SOLCHEN LADEEINRICHTUNG**

(30) Priorität: 11.12.2024 DE 102024211778
(71) Anmelder: Siemens Aktiengesellschaft, 80333 München (DE)
(72) Erfinder: Liedtke, Marcus, 13629 Berlin (DE); Mauersberger, Markus, 2845-547 Corroios (PT)
(74) Vertreter: Siemens Patent Attorneys

(57) **Zusammenfassung**

Ladeeinrichtung (1) für Elektrofahrzeuge umfassend zumindest eine Stromabgabeeinheit (2) zur Abgabe des Stroms an ein oder mehrere Elektrofahrzeuge und zumindest ein Ladekabel (3) für ein Elektrofahrzeug, wobei das zumindest eine Ladekabel (3) mit der zumindest einen Stromabgabeeinheit (2) verbunden ist, wobei die Ladeeinrichtung (1) eine Detektionseinrichtung (5, 5', 5"), welche zum Detektieren eines Durchtrennens des zumindest einen Ladekabels (3) ausgebildet ist, und eine Alarmeinrichtung (6, 6', 6") aufweist, wobei die Alarmeinrichtung (6, 6', 6") ausgebildet ist, bei dem Detektieren des Durchtrennens des zumindest einen Ladekabels (3) zumindest eine Warnung zu erzeugen.

## Beschreibung

Die Erfindung betrifft eine Ladeeinrichtung, insbesondere Ladesäule, für Elektrofahrzeuge umfassend zumindest eine Stromabgabeeinheit zur Abgabe des Stroms an ein oder mehrere Elektrofahrzeuge und zumindest ein Ladekabel für ein Elektrofahrzeug, wobei das zumindest eine Ladekabel mit der zumindest einen Stromabgabeeinheit verbunden ist.

Außerdem betrifft die Erfindung ein Verfahren zum Betreiben einer solchen Ladeeinrichtung.

Problematisch bei heutigen Ladeeinrichtungen ist, dass sie gegen Diebstahl von Ladekabeln nicht ausreichend geschützt sind. Dies führt dazu, dass insbesondere bei hochwertigeren Ladesäulen Kabel entwendet werden.

Die Aufgabe der vorliegenden Erfindung ist es, den Diebstahl von Ladekabeln an Ladestationen zu erschweren und die Sicherheit der Elektrofahrzeugnutzer zu gewährleisten.

Die Aufgabe wird mit einer eingangs genannten Ladeeinrichtung erfindungsgemäß dadurch gelöst, dass die Ladeeinrichtung eine Detektionseinrichtung, welche zum Detektieren eines Durchtrennens des zumindest eines Ladekabels ausgebildet ist, und eine Alarmeinrichtung aufweist, wobei die Alarmeinrichtung ausgebildet ist, bei dem Detektieren des Durchtrennens des zumindest eines Ladekabels zumindest eine Warnung zu erzeugen, wobei die Ladeeinrichtung einen Diebstahl-Modus aufweist, wobei die Ladeeinrichtung eingerichtet ist, beim Detektieren des Durchtrennens des zumindest eines Ladekabels in den Diebstahl-Modus zu wechseln und in dem Diebstahl-Modus mittels der Alarmeinrichtung die zumindest eine Warnung zu erzeugen, wobei die Ladeeinrichtung einen in die Ladeeinrichtung integrierten Bildschirm, der eingerichtet ist, Warnhinweise anzuzeigen, indem er beispielsweise Einblendungen, Ein- und Ausschalten oder Änderungen der Leuchtintensität vornimmt, und/oder ein LED-Leuchtmittel aufweist und eingerichtet ist, die zumindest eine Warnung in dem Diebstahl-Modus mittels des LED-Leuchtmittels zu erzeugen, wobei das LED-Leuchtmittel ausgebildet ist, Licht unterschiedlicher Wellenlängen und/oder unterschiedlicher Intensität abzustrahlen und/oder zumindest einen in die Ladeeinrichtung integrierten Lüfter aufweist und eingerichtet ist, die zumindest eine Warnung in dem Diebstahl-Modus mittels des zumindest einen Lüfters zu erzeugen.

Die Ladeeinrichtung kann verschiedene Mechanismen zu einer Ladekabeldiebstahlswarnung kombinieren. Hierzu kann sie mit verschiedenen Detektionsmechanismen ausgestattet sein, um das Durchtrennen des Ladekabels zu erkennen.

Bei einer Ausführungsform kann es vorgesehen sein, dass die Detektionseinrichtung zumindest einen Temperatursensor, welcher vorzugsweise in dem zumindest einen Ladekabel und/oder - stecker integriert ist, und/oder eine Überwachungseinheit, die eingerichtet ist, Kommunikation-Signale zu überwachen und/oder eine Isolationsüberprüfung vorzugsweise periodisch durchzuführen. Es besteht auch die Möglichkeit, mehrere Funktionen zu kombinieren, um eine zuverlässige Erkennung sicherzustellen.

Dabei kann die Detektionseinrichtung den Kontakt zu diesen Sensoren überwachen. Sollte der Kontakt abbrechen, wird das Durchtrennen detektiert. In Reaktion darauf wird ein Alarm ausgelöst.

Bei den Kommunikation-Signalen kann es sich insbesondere um Signale zwischen einem EV (Elektrofahrzeug) und der Ladesäule, beispielsweise während des Ladevorgangs handeln.

Bei einer Ausführungsform kann es vorgesehen sein, dass die Ladeeinrichtung einen Isolationsmessgerät (insulation measuring device) aufweist, der eingerichtet ist Isolationsüberprüfung durchzuführen und das Durchtrennen des Ladekabels zu detektieren.

Sobald das Abschneiden des Kabels erkannt wird, wechselt die Ladesäule in einen Diebstahl-Modus - den sogenannten "Theft-Modus" - und erzeugt eine oder mehrere Warnungen.

Es können in der Ladeeinrichtung verschiedene Mittel vorgesehen sein, mit welchen Aufmerksamkeit des Publikums in der Umgebung auf die Ladeeinrichtung gelenkt werden kann.

Bei einer Ausführungsform kann es vorgesehen sein, dass die Ladeeinrichtung eine Kommunikationseinrichtung umfasst, mit welcher die zumindest eine Warnung an einen Empfänger (z.B. Smartphone, Backend, Überwachungsdienst in einer Cloud, etc.) übertragbar ist.

Bei einer Ausführungsform kann es vorgesehen sein, dass das LED-Leuchtmittel ein oder mehrere LED-Bänder aufweist.

In diesem Modus wechseln die Farben vorhandener LED-Bänder in schneller Folge z.B. zwischen Rot und Blau. Zusätzlich kann ein vorhandener Bildschirm einen Warnhinweis einblenden, um die Aufmerksamkeit weiter zu steigern.

Bei einer Ausführungsform kann es vorgesehen sein, dass die Ladeeinrichtung zumindest einen Lüfter aufweist und eingerichtet ist, die zumindest eine Warnung in dem Diebstahl-Modus mittels des zumindest einen Lüfters zu erzeugen.

Es ist auch denkbar, im Gerät befindliche Lüfter auf 100% zu beschleunigen, um eine laute Geräuschkulisse zu erzeugen und potenzielle Diebe von weiteren Kabelentwendungen am gleichen Standort abzuschrecken.

Durch die Integration verschiedener Detektionsmechanismen und die Verwendung visueller und akustischer Alarme wird ein effektiver Diebstahlschutz gewährleistet.

Bei einer Ausführungsform kann es vorgesehen sein, dass die Ladeeinrichtung eingerichtet ist, die zumindest eine Warnung ununterbrochen für eine Zeit von einigen Minuten, vorzugsweise für weniger als fünf, insbesondere für weniger als zwei Minuten zu erzeugen.

Die könnte vorteilhaft sein, um bei falsch positiven Erkennungen keinen dauerhaften Status zu erzeugen.

Außerdem wird die oben genannte Aufgabe mit einem eingangs genannten Verfahren erfindungsgemäß dadurch gelöst, dass das zumindest eine Ladekabel mit der zumindest einen Stromabgabeeinheit verbunden ist, wobei die Ladeeinrichtung eine Detektionseinrichtung und eine Alarmeinrichtung aufweist, wobei
- ein Durchtrennen des zumindest eines Ladekabels mittels der Detektionseinrichtung detektiert wird, und
- bei dem Detektieren des Durchtrennens des zumindest eines Ladekabels mittels der Alarmeinrichtung zumindest eine Warnung erzeugt wird, wobei die Ladeeinrichtung einen Diebstahl-Modus aufweist, wobei die Ladeeinrichtung in den Diebstahl-Modus wechselt, sobald ein Durchtrennen des zumindest eines Ladekabels detektiert wird, und in dem Diebstahl-Modus mittels der Alarmeinrichtung die zumindest eine Warnung erzeugt, wobei die Ladeeinrichtung
- einen in die Ladeeinrichtung integrierten Bildschirm, der Warnhinweise anzeigt, indem er beispielsweise Einblendungen, Ein- und Ausschalten oder Änderungen der Leuchtintensität vornimmt,
- LED-Leuchtmittel aufweist und die zumindest eine Warnung in dem Diebstahl-Modus mittels des LED-Leuchtmittels erzeugt, wobei das LED-Leuchtmittel ausgebildet ist, Licht unterschiedlicher Wellenlängen und/oder unterschiedlicher Intensität abzustrahlen und/oder
- zumindest einen in die Ladeeinrichtung integrierten Lüfter aufweist und die zumindest eine Warnung in dem Diebstahl-Modus mittels des zumindest einen Lüfters erzeugt.

Bei einer Ausführungsform kann es vorgesehen sein, dass die Ladeeinrichtung eine Überwachungseinheit umfasst, wobei Mittels der Überwachungseinheit Kommunikation-Signale überwacht und/oder eine Isolationsüberprüfung vorzugsweise periodisch durchgeführt wird.

Bei einer Ausführungsform kann es vorgesehen sein, dass die zumindest eine Warnung mittels des zumindest einen Lüfters erzeugt wird, indem die Lüftergeschwindigkeit erhöht wird.

Bei einer Ausführungsform kann es vorgesehen sein, dass die zumindest eine Warnung ununterbrochen für eine Zeit von einigen Minuten, vorzugsweise für weniger als fünf, insbesondere für weniger als zwei Minuten erzeugt wird.

Im Folgenden wird die Erfindung anhand der in den Figuren dargestellten Ausführungsbeispiele näher beschrieben und erläutert.
FIG 1 zeigt eine Ladeeinrichtung;
FIG 2 zeigt ein Verfahren zum Betreiben der Ladeeinrichtung.

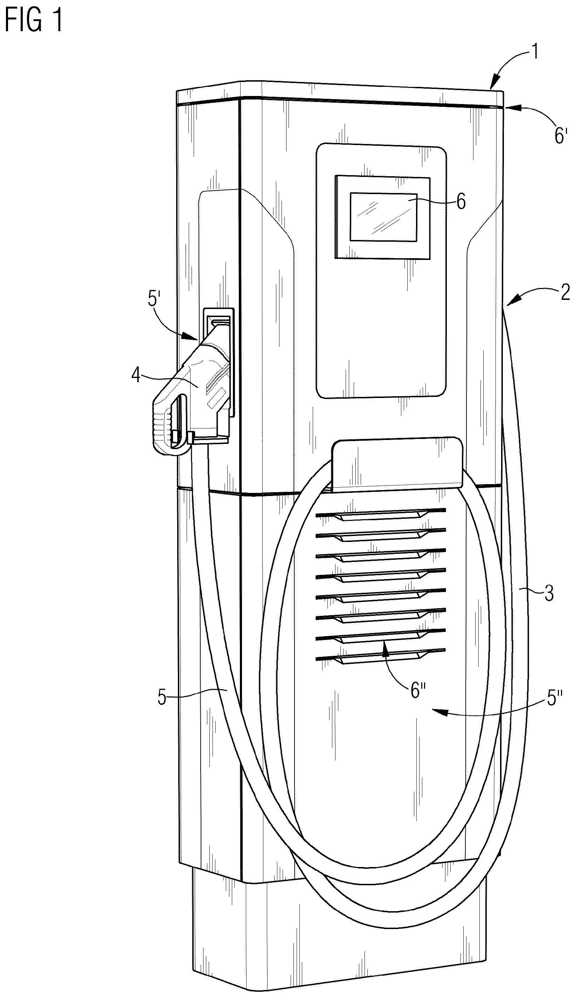

FIG 1 zeigt eine Ladeeinrichtung 1 für Elektrofahrzeuge, insbesondere eine Ladesäule, die verschiedene Komponenten umfasst, um den Diebstahl von Ladekabeln zu erschweren und die Sicherheit der Elektrofahrzeugnutzer zu gewährleisten.

Die Ladeeinrichtung 1 umfasst eine Stromabgabeeinheit 2, die zur Abgabe des Stroms an ein oder mehrere Elektrofahrzeuge dient. Ein Ladekabel 3 ist mit der Stromabgabeeinheit 2 verbunden und ermöglicht eine Verbindung zu einem Elektrofahrzeug. Das Ladekabel 3 ist über einen Stecker 4 mit dem Elektrofahrzeug verbindbar. Gezeigt ist ein Ladekabel 3, bei welchem das Ladekabel in die dafür an dem Ladesäulengehäuse vorgesehene Aufnahme sicher verstaut ist.

Die Ladeeinrichtung 1 ist mit mehreren Detektionseinrichtungen 5, 5', 5" ausgestattet, die zum Detektieren eines Durchtrennens des Ladekabels 3 ausgebildet sind. Diese Detektionseinrichtungen können verschiedene Sensoren und/oder Überwachungsvorrichtungen 5, 5' umfassen, beispielsweise einen oder mehrere Temperatursensoren und/oder eine oder mehrere Kommunikationssignal-Überwachungseinheiten umfassen. Die Temperatur- und/oder Signal-Sensoren können in das Ladekabel 3 und/oder den Stecker 4 integriert sein und von einer entsprechenden Überwachungseinheit, die beispielsweise in der Ladesäule montiert ist, überwacht werden. Ein Isolationsmessgerät (IMD) 5" kann ebenfalls vorgesehen sein, um die Isolationsüberprüfung durchzuführen und das Durchtrennen des Ladekabels 3 zu detektieren. Das IMD 5" kann beispielsweise in der Ladesäule montiert sein.

Die Ladeeinrichtung 1 verfügt über eine Alarmeinrichtung 6, 6', 6", die bei Detektion des Durchtrennens des Ladekabels 3 eine Warnung erzeugt. Diese Alarmeinrichtung 6, 6', 6" kann verschiedene Formen annehmen, einschließlich visueller und akustischer Warnungen. Ein Bildschirm 6 kann beispielsweise in die Ladeeinrichtung 1 integriert sein und kann Warnhinweise anzeigen, indem er beispielsweise Einblendungen, Ein- und Ausschalten oder Änderungen der Leuchtintensität vornimmt.

Zusätzlich oder alternativ kann die Ladeeinrichtung 1 mit Leuchtmitteln 6' ausgestattet sein, die Licht unterschiedlicher Wellenlängen und/oder unterschiedlicher Intensität abstrahlen können. Diese Leuchtmittel sind vorzugsweise als LED-Leuchtmittel ausgebildet und können ein oder mehrere LED-Bänder umfassen. Diese können grundsätzlich an einer beliebigen Stelle außen an dem Gehäuse der Ladesäule angeordnet sein. Beispielsweise sind das LED-Leuchtmittel, wie FIG 1 zu entnehmen ist, in einem oberen Bereich, oberhalb des Steckers 4 und des Ausgangs des Ladekabels 3 aus dem Gehäuse angeordnet.

Ein Lüfter 6" kann ebenfalls in die Ladeeinrichtung 1 integriert sein und kann zur Erzeugung einer akustischen Warnung verwendet werden, indem beispielsweise die Lüftergeschwindigkeit erhöht wird, um eine laute Geräuschkulisse zu erzeugen.

Die Ladeeinrichtung 1 kann in einen Diebstahl-Modus wechseln, sobald das Durchtrennen des Ladekabels 3 detektiert wird. In diesem Modus werden die oben genannten Warnungen aktiviert, um potenzielle Diebe abzuschrecken und die Aufmerksamkeit des Publikums in der Umgebung auf die Ladeeinrichtung zu lenken.

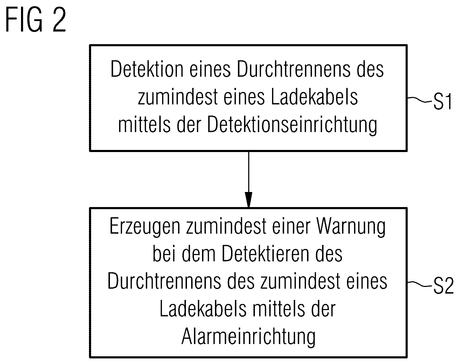

FIG 2 zeigt ein Ablaufdiagramm eines Verfahrens zum Betreiben einer Ladeeinrichtung, beispielsweise einer Ladesäule der FIG 1.

Die Ladeeinrichtung für Elektrofahrzeuge umfasst zumindest eine Stromabgabeeinheit zur Abgabe des Stroms an ein oder mehrere Elektrofahrzeuge und zumindest ein Ladekabel, wobei das zumindest eine Ladekabel mit der zumindest einen Stromabgabeeinheit verbunden ist. Darüber hinaus weist die Ladeeinrichtung eine Detektionseinrichtung und eine Alarmeinrichtung auf.

In einem ersten Schritt S1 wird ein Durchtrennen des zumindest eines Ladekabels mittels der Detektionseinrichtung detektiert.

In einem zweiten Schritt S2, wenn das Durchtrennen des zumindest eines Ladekabels detektiert wurde, wird zumindest eine Warnung mittels der Alarmeinrichtung erzeugt.

Die Vorrichtungsmerkmale der Ladeeinrichtung können den Vorrichtungsmerkmale der in Bezug auf FIG 1 beschriebenen Ladesäule entsprechen.

Obwohl die Erfindung im Detail durch die bevorzugten Ausführungsbeispiele näher illustriert und beschrieben wurde, ist die Erfindung nicht durch die offenbarten Beispiele eingeschränkt. Variationen hiervon können vom Fachmann abgeleitet werden, ohne den Schutzumfang der Erfindung, wie er durch die nachfolgenden Patentansprüche definiert wird, zu verlassen.

## Patentansprüche

1. Ladeeinrichtung (1) für Elektrofahrzeuge umfassend zumindest eine Stromabgabeeinheit (2) zur Abgabe des Stroms an ein oder mehrere Elektrofahrzeuge und zumindest ein Ladekabel (3) für ein Elektrofahrzeug, wobei das zumindest eine Ladekabel (3) mit der zumindest einen Stromabgabeeinheit (2) verbunden ist, wobei die Ladeeinrichtung (1) eine Detektionseinrichtung (5, 5', 5"), welche zum Detektieren eines Durchtrennens des zumindest einen Ladekabels (3) ausgebildet ist, und eine Alarmeinrichtung (6, 6', 6") aufweist, wobei die Alarmeinrichtung (6, 6', 6") ausgebildet ist, bei dem Detektieren des Durchtrennens des zumindest einen Ladekabels (3) zumindest eine Warnung zu erzeugen, wobei die Ladeeinrichtung (1) einen Diebstahl-Modus aufweist, wobei die Ladeeinrichtung (1) eingerichtet ist, beim Detektieren des Durchtrennens des zumindest eines Ladekabels (3) in den Diebstahl-Modus zu wechseln und in dem Diebstahl-Modus mittels der Alarmeinrichtung (6, 6', 6") die zumindest eine Warnung zu erzeugen, wobei die Ladeeinrichtung (1)
- einen in die Ladeeinrichtung integrierten Bildschirm (6), der eingerichtet ist, Warnhinweise anzuzeigen, indem er beispielsweise Einblendungen, Ein- und Ausschalten oder Änderungen der Leuchtintensität vornimmt, und/oder
- ein LED-Leuchtmittel (6, 6') aufweist und eingerichtet ist, die zumindest eine Warnung in dem Diebstahl-Modus mittels des LED-Leuchtmittels (6, 6') zu erzeugen, wobei das LED-Leuchtmittel ausgebildet ist, Licht unterschiedlicher Wellenlängen und/oder unterschiedlicher Intensität abzustrahlen und/oder
- zumindest einen in die Ladeeinrichtung integrierten Lüfter (6") aufweist und eingerichtet ist, die zumindest eine Warnung in dem Diebstahl-Modus mittels des zumindest einen Lüfters (6") zu erzeugen.

2. Ladeeinrichtung nach Anspruch 1, wobei die Detektionseinrichtung zumindest einen Temperatursensor (5, 5'), welcher vorzugsweise in dem zumindest einen Ladekabel (3) und/oder Ladestecker (4) integriert ist,
und/oder
eine Überwachungseinheit (5"), die eingerichtet ist, Kommunikation-Signale zu überwachen und/oder eine Isolationsüberprüfung vorzugsweise periodisch durchzuführen.

3. Ladeeinrichtung nach Anspruch 1 oder 2, wobei das LED-Leuchtmittel ein oder mehrere LED-Bänder aufweist.

4. Ladeinrichtung nach einem der Ansprüche 1 bis 3, wobei die Ladeeinrichtung (1) eingerichtet ist, die zumindest eine Warnung ununterbrochen für eine Zeit von einigen Minuten, vorzugsweise für weniger als fünf, insbesondere für weniger als zwei Minuten zu erzeugen.

5. Verfahren zum Betreiben einer Ladeeinrichtung (1) für Elektrofahrzeuge umfassend zumindest eine Stromabgabeeinheit (2) zur Abgabe des Stroms an ein oder mehrere Elektrofahrzeuge und zumindest ein Ladekabel (3), wobei das zumindest eine Ladekabel (3) mit der zumindest einen Stromabgabeeinheit (2) verbunden ist, wobei die Ladeeinrichtung (1) eine Detektionseinrichtung (5, 5', 5") und eine Alarmeinrichtung (6, 6', 6") aufweist, wobei
- ein Durchtrennen des zumindest eines Ladekabels (3) mittels der Detektionseinrichtung (5, 5', 5") detektiert wird, und
- bei dem Detektieren des Durchtrennens des zumindest eines Ladekabels (1) mittels der Alarmeinrichtung (6, 6', 6") zumindest eine Warnung erzeugt wird, wobei die Ladeeinrichtung (1) einen Diebstahl-Modus aufweist, wobei die Ladeeinrichtung (1) in den Diebstahl-Modus wechselt, sobald ein Durchtrennen des zumindest eines Ladekabels (3) detektiert wird, und in dem Diebstahl-Modus mittels der Alarmeinrichtung (6, 6', 6") die zumindest eine Warnung erzeugt, wobei die Ladeeinrichtung (1)
- einen in die Ladeeinrichtung integrierten Bildschirm (6), der Warnhinweise anzeigt, indem er beispielsweise Einblendungen, Ein- und Ausschalten oder Änderungen der Leuchtintensität vornimmt,
- LED-Leuchtmittel (6, 6') aufweist und die zumindest eine Warnung in dem Diebstahl-Modus mittels des LED-Leuchtmittels (6, 6') erzeugt, wobei das LED-Leuchtmittel ausgebildet ist, Licht unterschiedlicher Wellenlängen und/oder unterschiedlicher Intensität abzustrahlen und/oder
- zumindest einen in die Ladeeinrichtung integrierten Lüfter (6") aufweist und die zumindest eine Warnung in dem Diebstahl-Modus mittels des zumindest einen Lüfters (6") erzeugt.

6. Verfahren nach Anspruch 5, wobei die Ladeeinrichtung (1) eine Überwachungseinheit umfasst, wobei
Mittels der Überwachungseinheit Kommunikation-Signale überwacht und/oder eine Isolationsüberprüfung vorzugsweise periodisch durchgeführt wird.

7. Verfahren nach Anspruch 5 oder 6, wobei die zumindest eine Warnung mittels des zumindest einen Lüfters erzeugt wird, indem die Lüftergeschwindigkeit erhöht wird.

8. Verfahren nach einem der Ansprüche 5 bis 7, wobei die zumindest eine Warnung ununterbrochen für eine Zeit von einigen Minuten, vorzugsweise für weniger als fünf, insbesondere für weniger als zwei Minuten erzeugt wird.
